# FASCICULE DE BREVET EUROPEEN

(11) **EP 2 497 165 B1**
(45) Date de publication et mention de la délivrance du brevet: **25.12.2013**
(21) Numéro de dépôt: 10792961.4
(22) Date de dépôt: 03.11.2010
(51) Int. Cl.: H01S 3/067, H01S 3/23

(54) **SOURCE OPTIQUE METTANT EN OEUVRE UNE FIBRE DOPEE, FIBRE POUR UNE TELLE SOURCE OPTIQUE ET PROCEDE DE FABRICATION D'UNE TELLE FIBRE.**
OPTISCHE QUELLE MIT EINER DOTIERTEN FASER, FASER FÜR EINE DERARTIGE OPTISCHE QUELLE UND VERFAHREN ZUR HERSTELLUNG EINER DERARTIGEN FASER
OPTICAL SOURCE IMPLEMENTING A DOPED FIBRE, FIBRE FOR SUCH AN OPTICAL SOURCE AND METHOD FOR MANUFACTURING SUCH A FIBRE

(30) Priorité: 03.11.2009 FR 0905271
(43) Date de publication de la demande: 12.09.2012
(73) Titulaire: Université de Bordeaux I, 33400 Talence (FR); Alphanov Centre Technologique Optique Et Lasers, 33405 Talence (FR)
(72) Inventeur: TRAYNOR, Nicholas, F-33300 Bordeaux (FR); BOULLET, Johan, F-33000 Bordeaux (FR); CORMIER, Eric, F-33610 Cestas (FR); BELLO DOUA, Ramatou, F-33130 Begles (FR)
(74) Mandataire: Novagraaf Technologies
(86) Numéro de dépôt international: PCT/FR2010/052354
(87) Numéro de publication internationale: WO 2011/055074

(56) Documents cités:
- WO-A2-2005/082801
- GB-A- 2 366 447
- US-A1- 2003 063 629
- MUENDEL M H ED - INSTITUTE OF ELECTRICAL AND ELECTRONICS ENGINEERS: "OPTIMAL INNER CLADDING SHAPES FOR DOUBLECLAD FIBER LASERS", CLEO '96. CONFERENCE ON LASERS AND ELECTRO-OPTICS. ANAHEIM, JUNE 2 - 7, 1996; [CONFERENCE ON LASERS AND ELECTRO-OPTICS. (CLEO)], NEW YORK, IEEE, US, vol. 9, no. 9, 1 janvier 1996 (1996-01-01) , page 209, XP000861756, ISBN: 978-0-7803-3183-9

## Description

La présente invention concerne le domaine fibres optiquement actives pour l'amplification optique et la réalisation de lasers à fibre de forte puissance et de forte brillance ou des amplificateurs à fibre de forte puissance et de forte brillance à des longueurs d'ondes comprise entre 780 nm et 1030 nm et de préférence inférieur à 1010 nm.

### DOMAINE TECHNIQUE DE L'INVENTION

La présente invention concerne plus particulièrement le domaine des fibres optiques dopées avec des terres rares telles que Ytterbium, Néodyme, Thulium, ou et des lasers et amplificateurs optiques mettant en oeuvre de telles fibres pour produire un rayonnement laser.

Une source cohérente de puissance produit avec une fibre dopée Ytterbium autour de 976 nm permet également de réaliser des sources de forte puissance autour de 488 nm par doublage de fréquence dans un cristal non-linéaire. Ces sources visibles sont très utiles pour des applications en biologie telles que la cytométrie de flux ou le séquençage ADN.

Les lasers à fibre dopée Ytterbium émettant autour de 976 nm, par exemple, ont de nombreuses applications dans le domaine des télécommunications, pour le pompage des amplificateurs et lasers à base de cristaux ou fibres dopées Ytterbium, et dans le domaine de la médecine.

Les matériaux dopés par des ions ytterbium (Ytterbium) présentent une très grande section efficace d'émission autour de 976 nm. Ils permettent de réaliser une source à 488 nm par doublement de fréquence.

Les caractéristiques des fibres optiques dopées ytterbium sont notamment un contraste spectral fort, un faisceau monomode transverse, de très forte puissance moyenne( supérieure 5W) et suivant le mode de réalisation: une pureté spectrale, une polarisation parfaitement définie, un mode continu sans bruit. Suivant les modes de réalisation, ces lasers peuvent être doublés en fréquence et produire du rayonnement bleu à 488 nm avec des puissances moyennes variant de 1 W à plus de 15 W en continu ou en pulsé.

### ETAT DE LA TECHNIQUE

On connaît par les articles Yllä Jarkko et al « A 3.5 W 977nm jacketed air clad fiber laser ytterbium doped fiber laser » (OSA Trends in Optics and Photonics, Advanced Solid State Lasers Vol. 34, 2000) et Boullet et al, (Optics Express, vol 16, N° 22, p. 17891,2008) la production de rayonnement continu monomode à 977 nm de 3.5 W en fibre souple et de 94 W en fibre rigide.

On connaît également pour la réalisation des sources optiques combinant forte puissance moyenne et forte brillance, l'utilisation d'une classe de fibres désignée par le vocable « fibre double gaine» (ou « double clad fiber» en anglais). Ces fibres consistent en un guide central formé par un coeur dopé aux ions terres rares (par exemple Er, Ytterbium, Nd, Tm, Ho, Pr, Sm) entouré par un deuxième guide de plus grand diamètre. Le guide externe, possédant en général une forte ouverture numérique, est adapté à l'injection d'un faisceau de forte puissance issue d'une diode laser multi-mode.

Cette lumière de pompe est absorbée par le coeur dopé pendant sa propagation dans le guide externe. Le coeur, de plus faible diamètre et de plus faible ouverture numérique, permet une émission (à la longueur d'onde défini par le spectre d'émission de l'élément terre rare) dans un mode optique proche de la limite de diffraction. Ces lasers sont parfois appelés « convertisseurs de brillance » (« brightness convertors » en anglais).

Les diodes lasers sont capables de délivrer des puissances de plusieurs kW à 976 nm. Cependant, la brillance est sévèrement limitée par la grande surface d'émission et la nécessité de mettre en forme les faisceaux venant des différents émetteurs du « stack » de diodes. Il est possible d'obtenir une bonne qualité spatiale de ces diodes lasers (on parle alors d'émission « monomode transverse», où le faisceau émis est en limite de diffraction), mais la puissance maximale actuellement réalisée varie de quelques centaines de mW à quelques Watts avec l'utilisation des structures spéciales.

Zenteno et al (electronics letters, vol. 37, n° 13, p. 819, 2001) ont utilisé 1W d'émission dans un faisceau en limite de diffraction à 978 nm. La fibre utilisée était de forme elliptique afin de faciliter le couplage d'une diode laser avec une surface d'émission rectangulaire. La puissance dans ce cas était limitée par la petite taille de la fibre double gaine (32 µm x 16 µm).

On connaît par l'article Yllä Jarkko et al (« A 3.5 W 977nm jacketed air clad fiber laser ytterbium doped fiber laser », OSA Trends in Optics and Photonics, Advanced Solid State Lasers Vol. 34, 2000) une fibre de géométrie circulaire avec un coeur et une gaine de faible diamètre pour produire plusieurs watts dans un faisceau monomode.

On connaît aussi par le brevet américain US6751241 une fibre optiquement active pour réaliser un laser à fibre ou un amplificateur à fibre constitué par :
un coeur dopé aux ions optiquement excitables de type Ytterbium ayant une transition à trois niveaux vers 980 nm et présentant un indice de réfraction de coeur ;
un gainage intérieur entourant le coeur et présentant un indice de réfraction inférieur à l'indice de réfraction du coeur, et une aire de section droite entre 2 et 8 fois supérieure à l'-aire de section droite du coeur
un gainage extérieur entourant le gainage intérieur présentant un indice de réfraction inférieur à l'indice de réfraction de gainage intérieur.

Ce brevet de l'art antérieur décrit un ratio de surface entre le coeur et la gaine compris entre 2 et 25, et un rapport entre le grand et le petit axe d'une forme non-circulaire supérieur à 1,5:1. Pour un exemple particulier décrit, où la fibre est dopée Ytterbium, le rapport des surfaces coeur/gaine est compris entre 2 et 8.

La fibre décrite dans ce document présente une gaine dont les formes ont été choisies pour faciliter l'injection d'une diode «broad stripe» avec une surface d'émission allongée.

On connaît également l'article de Kangkang Chen et al («100 W, fiberised, Linearly-Polarized, Picosecond Ytterbium Doped Fiber MOPA» Kangkang Chen, Shaif-ul Alam, Dejiao Lin, Andrew Malinowski and David J. Richardson, Optoelectronic Research Center, University of Southsampton, Southsampton SO17 1BJ, UK) qui décrit une fibre piconseconde MOPA qui délivre des pulses de 20 ps à une fréquence de 970 MHz et à une puissance moyenne de 100 W.

On connaît aussi par le brevet anglais GB 2 366 447 une source optique à fibre émettant un rayonnement monomode transverse contrôlé à une longueur d'onde inférieure à 1030 nm comprenant :
- au moins une diode laser apte à émettre une onde de pompe, et
- un tronçon de fibre optique amplificatrice gainée présentant deux extrémités, et comportant un coeur et une gaine de pompage, la fibre étant dopée avec un dopant de terre rare,
- des moyens de couplage de ladite source de pompe dans la gaine de ladite fibre dopée.

Le coeur de la fibre dopée comprend une partie cylindrique dopée avec une terre rare choisie parmi l'Ytterbium, Néodyme, Thulium, pour obtenir un indice de réfraction du coeur supérieur à celui de la gaine et la longueur d'onde d'excitation de la diode laser est comprise entre 750 nm et 960 nm ; et le diamètre de la gaine est supérieur à 50 micromètres.

### INCONVENIENT DE L'ETAT DE LA TECHNIQUE

Les solutions de l'art antérieur ne permettent pas de réaliser des sources à 976 nm en fibre souple pour des puissances continues supérieures à 3.5 W ou, dans le cas de sources pulsées, pour des puissances supérieures à 1W. Les fibres rigides permettent de produire des puissances jusqu'à 100 W mais souffrent de problèmes de compacité, finesse spectrale, polarisation. Par ailleurs, les lasers mettant en oeuvre les fibres dopées de l'art antérieur ne permettent pas de contrôler de manière satisfaisante la pureté spectrale des impulsions ni la polarisation.

En particulier, le problème technique posé par les solutions de l'art antérieur est que la géométrie transverse des fibres dopées utilisées dans l'art antérieur conduit à une probabilité d'absorption des ions sensiblement identique voire inférieure à la probabilité de réémission, pour une amplification autour de 976 nm. Ces solutions de l'art antérieur ne permettent donc pas de produire une émission stable à des longueurs d'onde inférieures à 1030 nm, et particulièrement à 1010 nm.

### SOLUTION APPORTEE PAR L'INVENTION

Afin de répondre à ces inconvénients, l'invention concerne une source optique à fibre émettant un rayonnement monomode transverse contrôlé à une longueur d'onde inférieure à 1030 nm comprenant :
- au moins une diode laser apte à émettre une onde de pompe, et
- un tronçon de fibre optique amplificatrice gainée présentant deux extrémités, ladite fibre optique amplificatrice comportant un coeur et une gaine de pompage, la fibre étant dopée avec un dopant de terre rare,
- des moyens de couplage de ladite source de pompe dans la gaine de ladite fibre dopée,
caractérisée en ce que
■ le coeur de la fibre dopée comprend une partie cylindrique dopée avec une terre rare choisie parmi l'Ytterbium, Néodyme, Thullium, pour obtenir un indice de réfraction du coeur supérieur à celui de la gaine ;
■ la longueur d'onde d'excitation de ladite diode laser est comprise entre 750 nm et 960 nm ; et
■ le diamètre de la gaine est supérieur à 50 micromètres et le rapport des surfaces entre le coeur dopé et la gaine de pompe est comprise entre 8 et 50.

Avantageusement, la section de ladite gaine présente un ratio grand axe/petit axe compris entre 1 et 1,4.

De préférence, le diamètre de ladite gaine est égal ou supérieur à 100 micromètres. ,

Selon une première variante préférée, la longueur d'onde d'émission est comprise entre 965 nm et 1010 nm, et la fibre est dopée Ytterbium.

Selon une deuxième variante, la longueur d'onde d'émission est comprise entre 880 nm et 960 nm, et la fibre est dopée Néodyme.

Selon différents modes de réalisation :
- la fibre comporte une gaine externe et une gaine interne, l'indice du matériau transparent de la gaine externe étant inférieur à celui de la gaine interne ;
- la gaine de la fibre est un guide d'onde ayant une ouverture numérique supérieure à 0,3 apte à réaliser le guidage de l'onde de pompe, le guide d'onde étant formé par une couronne de trous d'air.

Selon un mode de réalisation préféré, la fibre présente un filtrage spectral intégré, avec un profil en «W ».

Selon une autre variante, la fibre est incluse dans un barreau de silice pur pour former un élément rigide.

Selon un mode de mise en oeuvre préféré, le dispositif selon l'invention est opéré en configuration MOPA (acronyme de "Master Oscillator Power Amplifier") bâti autour d'une architecture à oscillateur amplifié comportant :
- une fibre dopée constituant l'amplificateur
- un laser source émettant dans la bande spectrale d'amplification de ladite fibre dopée
- des moyens de couplage dudit laser source dans le coeur dopé de ladite fibre dopée, à au moins une extrémité de la fibre,
- une source de pompe émettant dans la bande spectrale d'absorption de la fibre amplicatrice,
- des moyens de couplage de ladite source de pompe dans la gaine de ladite fibre dopée,
ledit amplificateur comprenant des éléments sélectifs en longueur d'onde intra-cavité aptes à coopérer avec les moyens d'injection de sorte à filtrer sur la longueur d'onde donnée et également à réinjecter dans la fibre l'onde de pompe non absorbée après un passage dans la fibre.

Selon une variante avantageuse, ledit laser source est un laser à semi-conducteur.

De préférence, les moyens de couplage se rapportent à un coupleur comprenant N fibres multimodes d'entrée susceptibles d'être soudées directement aux sorties fibrées de N diodes de pompage et une fibre de sortie susceptible d'être directement soudée à la fibre amplificatrice.

Selon une variante, ladite fibre dopée constitue une fibre amplificatrice, ladite source comprenant en outre:
- une source de pompe émettant dans la bande spectrale d'absorption de la fibre amplicatrice ;
- des moyens de couplage de ladite source de pompe dans la gaine de ladite fibre dopée ;
- un résonateur optique apte à réinjecter le faisceau laser issu du coeur dopé de ladite fibre aux deux extrémités de ladite fibre amplificatrice,

Le résonateur peut être défini par des miroirs sélectifs, des réseaux de Bragg en volume ou des réseaux de Bragg photo-inscrits dans le coeur de la fibre dopée ou une autre fibre compatible en géométrie.

Selon un autre mode de réalisation avantageux, ladite fibre dopée est constituée par un coeur dopé entouré par une section tubulaire d'indice inférieur à l'indice du coeur dopé et de la gaine, l'indice variant radialement d'un indice maximum au centre, à un indice minimum au niveau de ladite section tubulaire, et un indice intermédiaire au niveau de la gaine.

Avantageusement, ladite fibre dopée est une fibre à maintien de polarisation.

Selon un mode de réalisation avantageux, la fibre dopée présente une biréfringence supérieure à 5.10⁻⁵

Selon une variante, la fibre dopée comprend une gaine présentant des zones longitudinales dopées d'un premier type de dopage et des zones longitudinales dopées d'un second type de dopage.

Selon une autre variante, ladite fibre dopée comprend un coeur portant au moins un réseau de Bragg inscrit par photogravure, avec un spectre de transmission déterminé pour filtrer les émissions en-dehors de la bande spectrale d'émission souhaitée.

Selon une alternative, la fibre dopée est divisée en deux tronçons au moins séparés par au moins un filtre dont le spectre de transmission est déterminé pour filtrer les émissions en-dehors de la bande spectrale d'émission souhaitée.

Selon une autre alternative, la fibre dopée est divisée en deux tronçons au moins, séparés par au moins un isolateur optique limitant les oscillations laser parasites en dehors de la bande d'émission souhaitée.

Selon premier mode de mise en oeuvre, la source optique émet en continu.

Selon une deuxième variante, elle émet en mode impulsionnel avec des durées d'impulsion comprises entre 100 femtosecondes et une microseconde.

L'invention concerne également un procédé de fabrication d'une fibre dopée destinée à une source caractérisé en ce que l'on assemble dans une préforme un élément central dopé avec une terre rare pour la formation du coeur de la fibre, et au moins six éléments périphériques dopés avec un premier dopant pour une partie d'entre eux, et un deuxième dopant pour certains d'entre eux, entourant ledit coeur, pour la formation de la gaine de la fibre.

Avantageusement, lesdits éléments périphériques dopés sont du bore pour une partie d'entre eux et de la silice pour une partie d'entre eux.

### DESCRIPTION D'UN EXEMPLE DETAILLE DE L'INVENTION

L'invention sera mieux comprise à la lecture de la description qui suit, se référant aux dessins annexés où :
- La figure 1 représente une vue en coupe d'une fibre selon l'invention,
- La figure 2 représente la courbe de densité spectrale en fonction de la longueur d'onde dans le spectre visible,
- La figure 3 représente la courbe de densité spectrale en fonction de la longueur d'onde dans une bande de longueur d'onde 975-980 nm,
- La figure 4 représente le spectre en sortie d'un système laser,
- La figure 5 représente le spectre en sortie d'un système MOPA,
- La figure 6 représente une architecture de laser selon l'invention,
- La figure 7 représente une vue schématique de préparation d'un assemblage de plusieurs éléments dans une préforme avant fibrage,
- La figure 8 représente la répartition du mode fondamental Infra-Rouge d'une fibre selon l'invention,
- La figure 9 représente les évolutions de la section interne dopée, du gain parasite à 1030 nm, et du pourcentage de pompe absorbée en fonction du diamètre interne de la couronne dopée ytterbium,
- La figure 10 représente une vue d'une fibre amplificatrice selon l'invention avec profil d'indice en « W »,

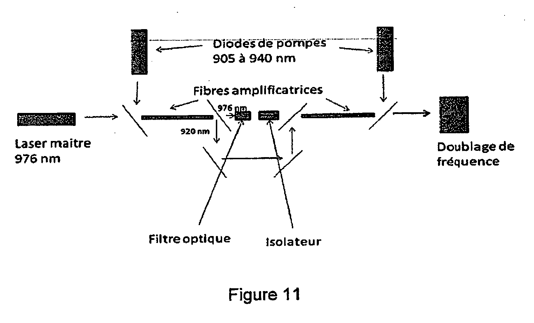

- La figure 11 représente une configuration pour le cas MOPA ;
- La figure 12 représente une configuration laser à fibre à 977 nm haute puissance tout intégré selon un autre mode de réalisation de l'invention;
- La figure 13 représente une configuration MOPA haute puissance à 977 nm tout intégré selon un autre mode de réalisation de l'invention.

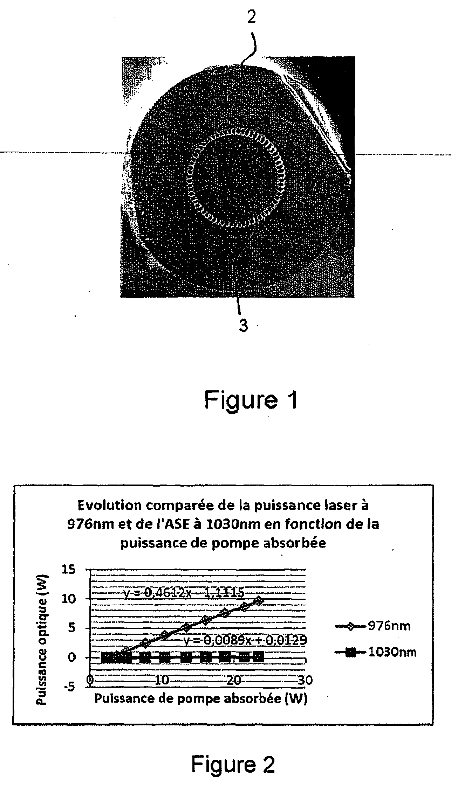

La figure 1 représente une vue en coupe d'une fibre selon un mode de réalisation de l'invention. La fibre est une fibre « air-clad » avec un diamètre extérieur de 200 µm, un diamètre de gaine (2) de 80 µm et un diamètre de coeur (3) de 20 µm. Le coeur de la fibre est constitué d'un zone cylindrique avec une indice de réfraction supérieur à celui de la gaine. Ce coeur est dopé sur tout son volume avec l'élément terre rare Yb, ainsi qu'avec un ou plusieurs co-dopants choisi parmi P, Ce, Al, Ge. Le guide multi-mode est défini par l'air-clad.

Dans le cas idéal, cette fibre présenterait un diamètre de coeur d'environ 25 µm et un diamètre de gaine d'environ 100 µm (ratio de surface entre la gaine et le coeur de 16). Un diamètre de coeur entre 10 et 30 µm est acceptable pour l'application. De préférence, le ratio de surface entre la gaine et le coeur de la fibre sera 8 et 25 pour une opération laser efficace à 976 nm. Il apparaît qu'au-delà d'un ratio de 50 le rayon laser à 976 nm est difficilement observable.

Le coeur (3), d'une ouverture numérique de 0,06, est faiblement multi-mode à 976 nm. La surface de la gaine de pompe est environ 10 fois plus importante que celle décrite dans le document Yllä Jarkko et al, « A 3.5 W 977nm jacketed air clad fiber laser ytterbium doped fiber laser », OSA Trends in Optics and Photonics, Advanced Solid State Lasers Vol. 34, 2000).

Elle permet l'injection de plusieurs dizaines de Watts de pompe. Les performances laser à 976 nm (figure 2) présentent une puissance de sortie de 10W à 976 nm et un très faible niveau d'ASE à 1030 nm. Cette puissance, limitée seulement par la puissance de pompe disponible, est trois fois supérieure au record précédent dans une fibre souple. L'efficacité du système (30%) est limitée par le taux de couplage de la pompe dans l'air-clad (l'ouverture numérique de l'air-clad était de 0,4, mais une ouverture numérique supérieur à 0,6 est envisageable).

Compte tenu du niveau de brillance des diodes actuelles, il est envisageable d'injecter plus de 100W dans une telle fibre, ce qui donne une puissance de sortie supérieure à 50W à 976 nm pour un rendement raisonnable de 50%.

Une telle fibre permet en premier lieu d'améliorer la qualité spatiale en sortie.

La qualité spatiale d'un mode optique est définie par le paramètre M2, où M2=1 correspond à un mode parfaitement gaussien à la limite de diffraction. Le paramètre M2 en sortie est mesuré pour un laser conforme à l'invention est de 1,17 pour une fibre roulée autour d'un mandrin de diamètre 210 mm. Malgré le caractère multi-mode de la fibre, le laser oscille naturellement sur le mode fondamental, aidé par la légère courbure qui crée des pertes différentielles accrues sur les modes d'ordre supérieur.

Une telle fibre permet également d'améliorer la qualité spectrale. Une cavité laser définie par de simples miroirs ne présente pas de sélection spectrale. L'émission laser se présente alors sous la forme d'une multitude de lignes autour du maximum du gain à 976 nm (free running laser).

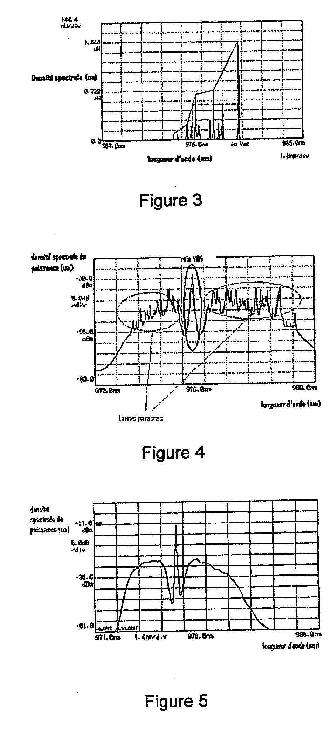

Il est clair que le spectre optique représenté en figure 3 n'est pas compatible avec la largeur d'acceptance spectrale des cristaux de type PPLN nécessaire pour le doublage en fréquence des sources lasers continus. Pour mieux adapter le spectre aux contraintes de doublage, il est possible d'utiliser des éléments filtrants avec une faible largeur spectrale, tel qu'un VBG (volume Bragg grating) en coupleur de sortie (figure 4).

Ainsi, il est possible de définir une raie spectrale d'environ 100 pm, ce qui est alors compatible avec le doublage dans des cristaux PPLN de plusieurs dizaines de mm. Néanmoins le fort gain qui existe dans la bande spectrale 975-980 nm peut entrainer une oscillation multiraies parasites, provoquée par des réflexions résiduelles intra-cavité cavité, ou dans des pics de réflexion secondaire dans le VBG.

Il existe un moyen sûr d'éviter toute oscillation parasite dans le système. L'opération du système en configuration MOPA (Master Oscillator Power Amplifier), nous permet de définir un système qui minimise chaque réflexion. Dans ce cas, un laser d'une puissance relativement faible (Master Oscillator) est amplifié par la suite dans un étage d'amplification fibré (Power Amplifier). Le fort gain de la fibre assure une efficacité optique similaire à une configuration laser. L'avantage majeur de ce système est la possibilité de découpler les besoins de puissance et de qualité spectrale. On peut choisir un laser avec des caractéristiques compatibles avec l'application finale, qui sera tout simplement amplifié par la fibre, tout en gardant ces mêmes caractéristiques. La figure 5 montre le spectre en sortie d'un système MOPA. Le taux d'extinction du spectre est supérieur à 15 dB, ce qui est une nette amélioration du taux d'extinction par rapport au cas laser (figure 4) mesuré à 7 dB.

Si le laser « maitre » choisi est spatialement monomode, il est possible d'exciter d'avantage le mode fondamental dans le fibre amplificatrice, ce qui peut donner une qualité spatiale supérieure au laser équivalent.

Le laser « maitre » peut être un laser à fibre ou une diode laser. Aujourd'hui il existe des diodes lasers qui ont des caractéristiques de puissance, spectre et polarisation qui sont parfaitement adaptés à cette fonction :
- Spatialement monomode et couplé dans une fibre
- Polarisé
- Puissance jusqu'à 400 mW ex fibre
- Largueur spectral inférieur à 0.1 nm

L'amplification directe d'un tel laser dans une fibre double gaine peut donner des puissances supérieures à plusieurs centaines de Watts.

Le laser maître peut également être un laser à fibre de faible puissance (exemple < 5W). Plusieurs étages d'amplification peuvent être utilisées pour atteindre des très fortes puissances moyennes.

Finalement le laser maître peut être un laser impulsionnel (femtoseconde, picoseconde ou nanoseconde). Dans ce cas il est très souvent plus facile de définir les caractéristiques temporelles du laser à faible puissance avant d'amplifier les impulsions dans un amplificateur de puissance. Nous avons constaté que dans le cas d'un laser à 976 nm en mode déclenché (Q-switch) il est préférable de construire une cavité laser à faible puissance afin de contrôler :
- la durée des impulsions
- l'impact de l'émission spontanée amplifiée (ASE) qui se construit entre chaque émission d'impulsions.
- La pureté spectrale des impulsions

Ces impulsions bien contrôlées seront ensuite amplifiées dans une fibre amplificatrice, permettant d'atteindre de très hautes puissances moyennes (5-100 W) en conservant leurs qualités spectrales, spatiales et temporelles initiales.

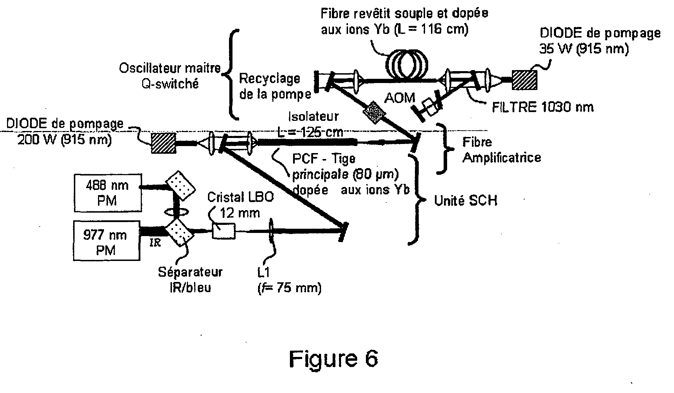

Dans la configuration représentée en figure 6, le dispositif laser atteint des performances avantageuses en termes de durée d'impulsions, d'énergie, de puissance moyenne et de puissance crête.

Les impulsions émises par un oscillateur maitre Q-switché se caractérisent par une durée de 12 ns pour un taux de répétition ajustable dans une gamme 10-400 kHz. La largeur spectrale de la source maître est fixée par un composant filtrant intra-cavité (VBG) à 125 pm. Les performances atteintes avec un exemple de réalisation sont les suivantes :
- Puissance moyenne max : 78 W
- Energie max : ~1 mJ
- Puissance crête max >100 kW

Après doublage en fréquence à 488 nm dans un cristal non linéaire de LBO, l'obtention de 16.1 W de puissance laser émise dans le bleu a été démontrée pour une puissance IR de 44 W. Rappelons que le précédent record, datant de 2006 rapportait l'émission de 83 mW dans le bleu (A. Bouchier, G. Lucas-Leclin, P. Georges, and J. Maillard, "Frequency doubling of an efficient continuous wave single-mode Yb-doped fiber laser at 978 nm in a periodically-poled MgO:LiNbO3 waveguide," Opt. Express 13, 6974-6979 (2005))

Cette performance constitue donc un record en terme de rayonnement monomode dans les bandes spectrales considérées (IR et visible) tant au niveau de la puissance moyenne qu'au niveau de l'énergie par impulsions.

### Fibres à maintien de polarisation

L'efficacité du doublage de fréquence pour atteindre une émission dans le bleu (488 nm) est maximisée si le rayonnement à 976 nm est entièrement polarisé Pour ce faire, il est nécessaire que la fibre amplificatrice assure le maintien de la polarisation du rayonnement. Avec les contraintes géométriques (faible ratio de surface coeur/gaine) il est raisonnable de se demander comment nous pouvons réaliser cette fonction - une structure classique en maintien de polarisation (fibre PANDA ou bow-tie) serait impossible à mettre en oeuvre à cause de la place limitée autour du coeur.

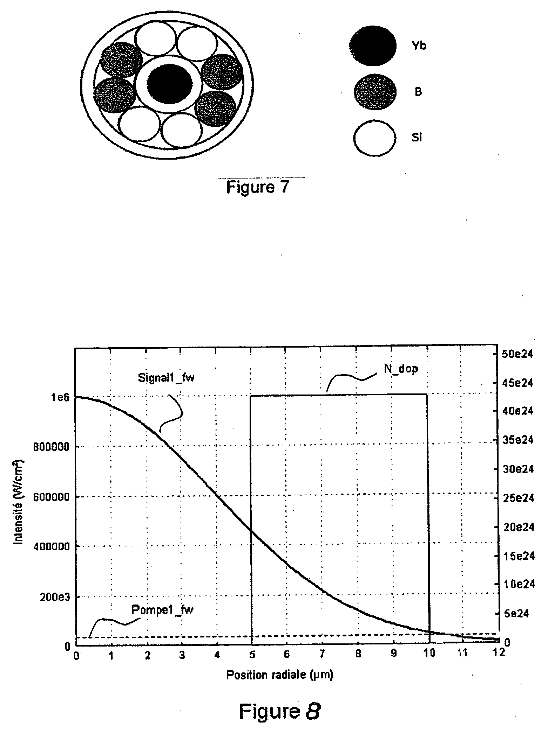

Plusieurs géométries spécifiques sont envisageables :
- Fibre à coeur elliptique. Un coeur non-circulaire a la propriété d'être intrinsèquement biréfringent, avec l'avantage de ne pas imposer des contraintes sur les dimensions de la gaine. Pour définir un coeur elliptique (ou toute autre forme allongée) nous précisons un rapport de longueur entre le grand axe et le petit d'au moins 1,1 :1
- Fibres fabriquées par assemblage de plusieurs éléments dans une préforme avant fibrage (Figure 7)

Cette géométrie particulière permet d'augmenter le volume de silice dopé avec du Bore (élément qui impose les contraintes mécaniques responsables de la biréfringence) par l'utilisation de plusieurs barreaux, sans trop augmenter le diamètre de la gaine.

On introduit dans la préforme un élément central (8) dopé Ytterbium entouré d'éléments dopés Bore (9) et d'éléments dopés Néodyme (10). Dans l'exemple décrit, les éléments sont disposés radialement, par paires adjacentes d'éléments de même type de dopage.

Il est également possible, dans certaines configurations, que cette fibre puisse avoir une fonction de fibre polarisante - dans ce cas, au lieu d'introduire une forte différence entre les indices effectifs des deux polarisations (fibre à maintien de polarisation), l'enroulement de la fibre avec un rayon de courbure spécifique et aligné selon l'axe des éléments dopés Bore peut augmenter les pertes de propagation pour un des deux axes de polarisation. Ceci est particulièrement intéressant en mode laser où il est nécessaire de discriminer entre les deux états de polarisation afin d'émettre un rayon polarisé.

Une telle fibre représentée en figure 8 présente avec une biréfringence mesurée supérieure à 10⁻⁴.

### Inscription de réseaux de Bragg inclinés

Les réseaux de Bragg incliné (« tilted Bragg gratings ») peuvent introduire des pertes lors de la propagation sur un des deux axes de polarisation. Ces réseaux peuvent être utilisés pour transformer une fibre normale en fibre à maintien de polarisation et pour transformer une fibre à maintien de polarisation en fibre polarisante. Il s'agit de l'inscription de plusieurs réseaux tout au long de la fibre dopée Yb. Ce dispositif peut également jouer un rôle de filtrage.

### Filtrage de l'ASE autour de 1030 nm

Les cavités lasers décrites sont limitées car elles nécessitent de filtrer sévèrement l'ASE autour de 1030 nm et ceci en dehors de la fibre dopée (élément filtrant inséré dans la cavité à la sortie de la fibre). Le filtrage extérieur étant difficilement réalisable au-dessus de 60 dB, cette contrainte limite fortement la longueur de la fibre (et l'efficacité du laser) pratiquement utilisable. Une façon élégante de contourner cette contrainte est d'introduire des moyens de filtrage de ce rayonnement parasite tout au long de la fibre amplificatrice. Ceci est possible avec de nombreux dispositifs .

### Fibre amplificatrice avec profil d'indice en « W »

L'utilisation d'une gaine « enterrée » autour du coeur dopé permet d'introduire une forte variation de l'indice effectif du mode fondamental en fonction de la longueur d'onde.

Dans ce cas un anneau d'un faible indice de réfraction (plus faible qui celui de la gaine) est placé autour du coeur dopé - cet anneau est le plus souvent constitué de silice co-dopé avec du fluor.

Pour un certain rayon de courbure de la fibre nous pouvons introduire des pertes supplémentaires pour le mode autour de 1030 nm sans impacter le mode laser à 976 nm. Ceci permet de relâcher les contraintes sur la longueur de la fibre car le gain à 1030 nm est compensé par les pertes de guidage.

Cette géométrie de fibrage est évidemment plus compliquée à mettre en oeuvre et peut imposer certaines contraintes supplémentaires sur la géométrie de la fibre. D'autres méthodes de filtrage sont également possibles dans le cas ou ces contraintes ne sont pas compatibles avec les caractéristiques lasers souhaitées :

### Inscription de réseaux de Bragg à plusieurs endroits au long de la fibre amplificatrice

Il existe deux types de réseau de Bragg qui sont susceptible de jouer un rôle de filtrage d'ASE, les LPG (long period gratings) et les TFBG (tilted fibre Bragg gratings, ou réseaux de Bragg inclinés) :
Les LPG fonctionne par le couplage sélectif de certaines longueurs d'onde vers les modes de gaine. La lumière est expulsée du coeur monomode vers la gaine où la lumière est co-propageante mais ne reçoit que peu de gain optique grâce à son faible recouvrement avec le coeur dopé. Il est possible d'introduire des pertes supérieures à 10 dB sur une largeur spectrale de plusieurs dizaines de nanomètres.
Les TFBG ont une action similaire mais la lumière expulsée dans la gaine est en général retro-réfléchie. Ces réseaux sont également sensibles à la polarisation et, comme cité ci-dessus, pourraient rendre la fibre polarisante pour la longueur d'onde du signal. Pour les longueurs d'onde parasites, deux réseaux peuvent être inscrits pour introduire des pertes pour chaque polarisation.

Pour les deux types de réseaux, plusieurs inscriptions peuvent être effectuées tout au long de la fibre afin d'augmenter le taux de réjection du rayonnement parasite.

### Opération avec deux ou plusieurs étages d'amplification

Les méthodes de filtrage citées ci-dessus nécessitent une architecture spécifique de la fibre dopée ou une modification de la fibre par l'introduction de filtres photo-inscrits. Une dernière méthode de filtrage est envisageable qui ne demande aucune modification de la fibre dopée.

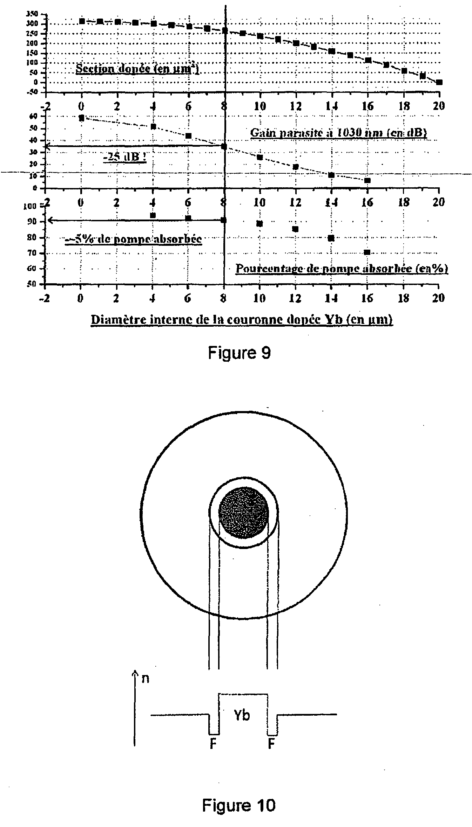

La configuration représentée en figure 10 pour le cas MOPA, est également valable pour le cas laser. Il s'agit de la séparation en deux ou plusieurs morceaux de la fibre amplificatrice associée à un recyclage de la pompe sur chaque tronçon. Le signal issu de chaque tronçon est injecté dans le tronçon suivant (4 miroirs qui définissent le chemin de la lumière à 920 nm, où au moins le premier est un miroir dichroïque qui sépare le signal à 976 nm et la pompe à 920 nm). La pompe est réinjectée dans le tronçon suivant afin de ne pas réduire l'efficacité de l'ensemble. On peut aussi imaginer d'avoir des étages indépendants où la pompe de chaque étage est recyclée dans lui-même. Entre chaque étage, l'onde à 976 nm ainsi que l'ASE à 1030 nm passent dans un filtre optique qui laisse passer l'onde à 976 mais qui atténue l'ASE à 1030 nm. Un isolateur optique est également utilisé (seulement dans le cas MOPA) pour atténuer l'ASE à 976 nm qui est contra propageante et qui peut capter une portion significative de la puissance laser.

Cette configuration permet d'utiliser une longueur totale de fibre supérieure par rapport à une configuration simple étape. Elle est également compatible avec un système tout intégré où un coupleur multi-mode est utilisé en sens inverse pour séparer la pompe et le signal après la première étape et un deuxième coupleur est utilisé pour combiner pompe et signal dans la deuxième étape d'amplification.

### Autres modes opératoires

Le concept d'amplification à 976 nm dans les fibres spéciales peut aussi être appliqué dans une configuration de source d'ASE où le système est constitué d'une fibre amplificatrice pompée d'un côté, d'un système de filtrage spectral et d'un miroir 100 % à 976 nm ainsi que d'un système de réinjection de la pompe. Cette source produit un rayonnement continu à 976 nm de quelques nm de largeur, non polarisé et spatialement monomode.

L'architecture MOPA peut aussi être déclinée pour générer des impulsions ultracourtes à 976 nm. En effet le Master Oscillateur peut être opéré en régime de blocage de mode pour produire des impulsions dans la gamme temporelle 100 fs⁻¹ ps. Ces impulsions sont ensuite amplifiées soit directement dans la fibre du Power Amplifier soit selon la technique d'amplification à dérive de fréquence en l'étirant temporellement avant l'amplification, avant remise en phase des composantes spectrales dans un élément dispersif de dispersion opposée à l'étireur (compresseur).

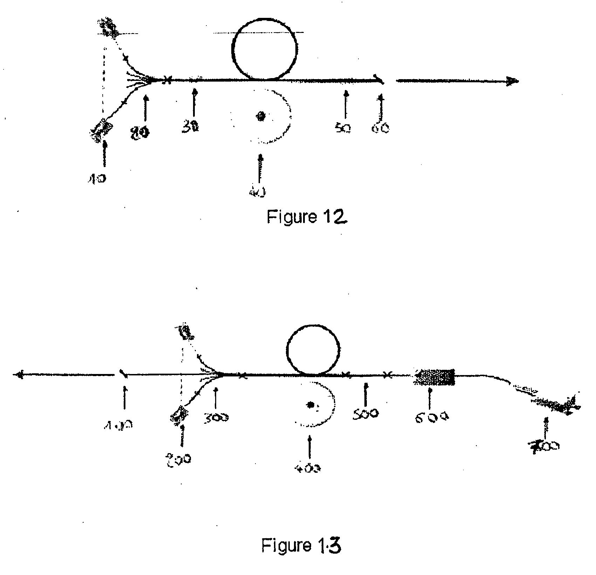

L'invention comprend également des modes de réalisation tout-intégrés. Dans ces modes de réalisation, le couplage intégré peut s'appliquer à une configuration laser, représentée sur la figure 12 ou bien à une configuration MOPA, représentée sur la figure 13. Ainsi, la figure 12 représente une source optique selon l'invention qui comprend :
- N diodes laser 10 multimodes 100/125 µm, ON=0.15,
- un coupleur de pompe 20 tout fibré N vers 1 ;
- un réseau de Réseau de Bragg 30 photo-inscrit dans le coeur dopé de la fibre amplificatrice de réflectivité maximale (100%) à 977 nm ;
- une fibre double gaine 40 microstructurée 20/80 à gaine d'air dopée aux ions ytterbium ;
- un réseau de Bragg 50 photo-inscrit dans le coeur dopé de la fibre amplificatrice de réflectivité 10% 977 nm ;
- un connecteur SMA 60 haute puissance poli en angle.

Ainsi, dans ce mode de réalisation, les moyens de couplage se rapportent à un coupleur comprenant N fibres multimodes d'entrée susceptibles d'être soudées directement aux sorties fibrées de N diodes de pompage et une fibre de sortie susceptible d'être directement soudée à la fibre amplificatrice.

De même, la figure 13 représente un mode de réalisation selon l'invention en configuration MOPA haute puissance à 977 nm tout intégré qui comprend :
- un connecteur SMA 100 haute puissance poli en angle ;
- N diodes laser multimodes 200 (100/125 µm ON=0.15) ;
- Un combineur de pompes 300 tout-fibré pourvu de N entrées multimodes et de une sortie signal monomode à 977 nm ;
- Une fibre double gaine 400 microstructurée 20/80 à gaine d'air dopée aux ions ytterbium ;
- Un suppresseur de mode de gaine 500 et un adaptateur de modes ; cet adaptateur est de préférence un adaptateur de modes 20 vers 6 ;
- Un isolateur 600 fibré à 977 nm ;
- Une diode laser monomode 700 de haute finesse spectrale à 977 nm.

## Revendications

1. Source optique à fibre émettant un rayonnement monomode transverse contrôlé à une longueur d'onde inférieure à 1030 nm comprenant :
- au moins une diode laser apte à émettre une onde de pompe, et
- un tronçon de fibre optique amplificatrice gainée présentant deux extrémités, ladite fibre optique amplificatrice comportant un coeur et une gaine de pompage, la fibre étant dopée avec un dopant de terre rare,
- des moyens de couplage de ladite source de pompe dans la gaine de ladite fibre dopée,
- le coeur de la fibre dopée comprend une partie cylindrique dopée avec une terre rare choisie parmi l'Ytterbium, Néodyme, Thullium, pour obtenir un indice de réfraction du coeur supérieur à celui de la gaine ;
**caractérisée en ce que**
- la longueur d'onde d'excitation de ladite diode laser est comprise entre 750 nm et 960 nm ; et
- le diamètre de la gaine est supérieur à 50 micromètres et le rapport des surfaces entre le coeur dopé et la gaine de pompe est compris entre 8 et 50.

2. Source optique selon la revendication principale, **caractérisée en ce que** la section de ladite gaine présente un ratio grand axe/petit axe compris entre 1 et 1,4.

3. Source optique selon l'une quelconque des revendications 1 à 2, **caractérisée en ce que** la longueur d'onde d'émission est comprise entre 965 nm et 1010 nm, et **en ce que** la fibre est dopée Ytterbium.

4. Source optique selon l'une quelconque des revendications 1 à 2, **caractérisée en ce que** la longueur d'onde d'émission est comprise entre 880 nm et 960 nm, et **en ce que** la fibre est dopée Néodyme.

5. Source optique selon l'une quelconque des revendications précédentes, **caractérisée en ce que** la fibre comporte une gaine externe et une gaine interne, l'indice du matériau transparent de la gaine externe étant inférieur à celui de la gaine interne.

6. Source optique selon l'une quelconque des revendications 1 à 4, **caractérisée en ce que** la gaine de la fibre est un guide d'onde ayant une ouverture numérique supérieure à 0,3 apte à réaliser le guidage de l'onde de pompe, le guide d'onde étant formé par une couronne de trous d'air.

7. Source optique selon l'une quelconque des revendications précédentes, **caractérisée en ce que** ladite source est opérée en configuration MOPA (acronyme de "Master Oscillator Power Amplifier") bâtie autour d'une architecture à oscillateur amplifié comportant :
- une fibre dopée constituant l'amplificateur,
- un laser source émettant dans la bande spectrale d'amplification de ladite fibre dopée,
- des moyens de couplage dudit laser source dans le coeur dopé de ladite fibre dopée, à au moins une extrémité de la fibre,
- une source de pompe émettant dans la bande spectrale d'absorption de la fibre amplicatrice,
- des moyens de couplage de ladite source de pompe dans la gaine de ladite fibre dopée,
ledit amplificateur comprenant des éléments sélectifs en longueur d'onde intra-cavité aptes à coopérer avec les moyens d'injection de sorte à filtrer sur la longueur d'onde donnée et également à réinjecter dans la fibre l'onde de pompe non absorbée après un passage dans la fibre.

8. Source optique selon l'une quelconque des revendications 1 à 7, **caractérisée en ce que** les moyens de couplage se rapportent à un coupleur comprenant N fibres multimodes d'entrée susceptibles d'être soudées directement aux sorties fibrées de N diodes de pompage et une fibre de sortie susceptible d'être directement soudée à la fibre amplificatrice.

9. Source optique selon l'une quelconque des revendications 1 à 6, **caractérisée en ce que** ladite fibre dopée constitue une fibre amplificatrice, ladite source comprenant en outre:
- une source de pompe émettant dans la bande spectrale d'absorption de la fibre amplificatrice ;
- des moyens de couplage de ladite source de pompe dans la gaine de ladite fibre dopée ;
- un résonateur optique apte à réinjecter le faisceau laser issu du coeur dopé de ladite fibre aux deux extrémités de ladite fibre amplificatrice.

10. Source optique selon l'une quelconque des revendications précédentes, **caractérisée en ce que** ladite fibre dopée est constituée par un coeur dopé entouré par une section tubulaire d'indice inférieur à l'indice du coeur dopé et de la gaine, l'indice variant radialement d'un indice maximum au centre, à un indice minimum au niveau de ladite section tubulaire, et un indice intermédiaire au niveau de la gaine.

11. Source optique selon l'une quelconque des revendications précédentes, **caractérisée en ce que** ladite fibre dopée est une fibre à maintien de polarisation.

12. Source optique selon la revendication précédente **caractérisée en ce que** ladite fibre dopée comprend une gaine présentant des zones longitudinales dopées d'un premier type de dopage et des zones longitudinales dopées d'un second type de dopage.

13. Source optique selon l'une quelconque des revendications précédentes **caractérisée en ce que** ladite fibre dopée comprend un coeur portant au moins un réseau de Bragg inscrit par photogravure, avec un spectre de transmission déterminé pour filtrer les émissions en-dehors de la bande spectrale d'émission souhaitée.

14. Source optique selon l'une quelconque des revendications précédentes **caractérisée en ce que** la fibre dopée est divisée en deux tronçons au moins séparés par au moins un filtre dont le spectre de transmission est déterminé pour filtrer les émissions endehors de la bande spectrale d'émission souhaitée ou par un isolateur optique.

15. Procédé de fabrication d'une fibre dopée destinée à une source conforme à la revendication 12, **caractérisé en ce que** l'on assemble dans une préforme un élément central dopé avec une terre rare pour la formation du coeur de la fibre, et au moins six éléments périphériques dopés avec un premier dopant pour une partie d'entre eux, et un second dopant pour certains d'entre eux, entourant ledit coeur, pour la formation de la gaine de la fibre.

## Patentansprüche

1. Optische Quelle mit Faser, die eine quer liegende Einmoden-Strahlung aussendet, gesteuert bei einer Wellenlänge von weniger als 1030 nm, umfassend:
- mindestens eine Laserdiode, die ausgelegt ist, um eine Pumpwelle auszusenden, und
- einen Abschnitt einer ummantelten verstärkenden optischen Faser, der zwei Enden aufweist, wobei die verstärkende optische Faser einen Kern und eine Pumpummantlung umfasst, wobei die Faser mit einem Zusatz aus Seltenerde dotiert ist,
- Mittel zur Kopplung der Pumpquelle in der Ummantelung der dotierten Faser,
- wobei der Kern der dotierten Faser einen zylindrischen Teil umfasst, dotiert mit einer Seltenerde, ausgewählt aus Ytterbium, Neodym, Thulium, um einen Refraktionsindex des Kerns zu erhalten, der höher als derjenige der Ummantelung ist;
**dadurch gekennzeichnet, dass**
- die Länge der Anregungswelle der Laserdiode zwischen 750 nm und 960 nm liegt; und
- der Durchmesser der Ummantelung größer als 50 Mikrometer ist, und das Verhältnis der Flächen zwischen dem dotierten Kern und der Pumpummantelung zwischen 8 und 50 liegt.

2. Optische Quelle nach dem Hauptanspruch, **dadurch gekennzeichnet, dass** der Abschnitt der Ummantelung ein Verhältnis zwischen der großen Achse und der kleinen Achse zwischen 1 und 1,4 aufweist,

3. Optische Quelle nach einem der Ansprüche 1 bis 2, **dadurch gekennzeichnet, dass** die Länge der Emissionswelle zwischen 965 nm und 1010 nm liegt, und dadurch, dass die Faser mit Ytterbium dotiert ist.

4. Optische Quelle nach einem der Ansprüche 1 bis 2, **dadurch gekennzeichnet, dass** die Länge der Emissionswelle zwischen 880 nm und 960 nm liegt, und dadurch, dass die Faser mit Neodym dotiert ist.

5. Optische Quelle nach einem der vorhergehenden Ansprüche, **dadurch gekennzeichnet, dass** die Faser eine äußere Ummantelung und eine innere Ummantelung umfasst, wobei der Index des transparenten Materials der äußeren Ummantelung geringer als derjenige der inneren Ummantelung ist.

6. Optische Quelle nach einem der Ansprüche 1 bis 4, **dadurch gekennzeichnet, dass** die Ummantelung der Faser ein Wellenleiter mit einer numerischen Apertur von mehr als 0,3 ist, ausgelegt, um die Führung der Pumpwelle durchzuführen, wobei der Wellenleiter aus einer Krone mit Luftlöchern besteht.

7. Optische Quelle nach einem der vorhergehenden Ansprüche, **dadurch gekennzeichnet, dass** die Quelle mit der Konfiguration MOPA (Akronym für "Master Oscillator Power Amplifier") betrieben wird, aufgebaut um eine Architektur mit verstärktem Oszillator, umfassend:
- eine dotierte Faser, die den Verstärkter darstellt,
- eine Laserquelle, die im spektralen Verstärkungsband der dotierten Faser sendet,
- Mittel zur Kopplung der Laserquelle im dotierten Kern der dotierten Faser an mindestens ein Ende der Faser,
- eine Pumpquelle, die im spektralen Absorptionsband der verstärkenden Faser sendet,
- Mittel zur Kopplung der Pumpquelle in der Ummantelung der dotierten Faser,
wobei der Verstärker selektive Elemente mit Intrakavitäts-Wellenlänge umfasst, dazu ausgelegt, mit den Injektionsmitteln zusammenzuarbeiten, um auf der gegebenen Wellenlänge zu filtern und auch erneut in die Faser die Pumpwelle zu injizieren, die nach einem Durchgang in der Faser nicht absorbiert ist.

8. Optische Quelle nach einem der Ansprüche 1 bis 7, **dadurch gekennzeichnet, dass** sich die Kopplungsmittel auf eine Kopplungsvorrichtung beziehen, die N Multimoden-Eingangsfaser umfasst, die direkt an die Faserausgänge mit N Pumpdioden geschweißt werden können, und eine Ausgangsfaser, die direkt an die verstärkende Faser geschweißt werden kann.

9. Optische Quelle nach einem der Ansprüche 1 bis 6, **dadurch gekennzeichnet, dass** die dotierte Faser eine verstärkende Faser darstellt, wobei die Quelle außerdem Folgendes umfasst:
- eine Pumpquelle, die im spektralen Absorptionsband der verstärkenden Faser sendet,
- Mittel zur Kopplung der Pumpquelle in der Ummantelung der dotierten Faser,
- einen optischen Resonator, der ausgelegt ist, um das Laserbündel, das vom dotierten Kern der Faser stammt, erneut an die zwei Enden der verstärkenden Faser zu injizieren.

10. Optische Quelle nach einem der vorhergehenden Ansprüche, **dadurch gekennzeichnet, dass** die dotierte Faser aus einem dotierten Kern besteht, der von einem rohrförmigen Abschnitt mit einem Index umgeben ist, der niedriger als der Index des dotierten Kerns ist, und der Ummantelung, wobei der Index radial von einem maximalen Index im Zentrum zu einem minimalen Index auf der Ebene des rohrförmigen Abschnitts und einem dazwischen liegenden Index auf der Ebene der Ummantelung variiert.

11. Optische Quelle nach einem der vorhergehenden Ansprüche, **dadurch gekennzeichnet, dass** die dotierte Faser eine Faser mit Erhaltung der Polarisierung ist.

12. Optische Quelle nach dem vorhergehenden Anspruch, **dadurch gekennzeichnet, dass** die dotierte Faser eine Ummantelung umfasst, die Längsbereiche aufweist, die mit einer ersten Art Zusatz dotiert sind, und Längsbereiche, die mit einer zweiten Art Zusatz dotiert sind.

13. Optische Quelle nach einem der vorhergehenden Ansprüche, **dadurch gekennzeichnet, dass** die dotierte Faser einen Kern aufweist, der mindestens einen Brigg-Spiegel umfasst, der durch Heliogravüre eingeschrieben ist, mit einem bestimmten Übertragungsspektrum, um die Emissionen außerhalb des gewünschten spektralen Verstärkungsbands zu filtern.

14. Optische Quelle nach einem der vorhergehenden Ansprüche, **dadurch gekennzeichnet, dass** die dotierte Faser in zwei Abschnitte unterteilt ist, mindestens getrennt durch mindestens einen Filter, dessen Übertragungsspektrum bestimmt ist, um die Emissionen außerhalb des gewünschten spektralen Verstärkungsbands zu filtern, oder durch einen optischen Isolator.

15. Verfahren zur Herstellung einer dotierten Faser für eine Quelle nach Anspruch 12, **dadurch gekennzeichnet, dass** auf einer Vorform ein zentrales Element, dotiert mit einer Seltenerde für die Bildung des Kerns der Faser anordnet wird, und mindestens sechs periphere Elemente, dotiert mit einem ersten Zusatz für einen Teil dieser, und einem zweiten Zusatz für Bestimmte dieser, die den Kern umgeben, für die Bildung der Ummantelung der Faser.

## Claims

1. Optical fibre source emitting controlled transverse monomer radiation at a wavelength of less than 1030 nm, comprising:
- at least one laser diode able to emit a pump wave, and
- a length of sheathed amplifying optical fibre having two ends, said amplifying optical fibre comprising a core and a pumping sheath, the fibre being doped with a rare-earth dopant,
- means for coupling said pump source in the sheath of said doped fibre,
- the core and the doped fibre comprises a cylindrical part doped with a rare earth chosen from ytterbium, neodymium or thullium in order to obtain a refractive index of the core greater than that of the sheath;
**characterised in that**
- the excitation wavelength of said laser diode is between 750 nm and 960 nm; and
- the diameter of the sheath is greater than 50 micrometres and the ratio of the surfaces between the doped core and the pump sheath is between 8 and 50.

2. Optical source according to the main claim, **characterised in that** the cross section of said sheath has a major axis/minor axis ratio of between 1 and 1.4.

3. Optical source according to either one of claims 1 to 2, **characterised in that** the emission wavelength is between 965 nm and 1010 nm, and **in that** the fibre is doped with ytterbium.

4. Optical source according to either one of claims 1 to 2, **characterised in that** the emission wavelength is between 880 nm and 960 nm, and **in that** the fibre is doped with neodymium.

5. Optical source according to any of the preceding claims, **characterised in that** the fibre comprises an outer sheath and inner sheath, the index of the transparent material of the outer sheath being less than that of the inner sheath.

6. Optical source according to any one of claims 1 to 4, **characterised in that** the sheath of the fibre is a waveguide having a numerical opening greater than 0.3 able to guide the pump wave, the waveguide being formed by a ring of air holes.

7. Optical source according to any one of the preceding claims, **characterised in that** said source is operated in MOPA (the acronym for "Master Oscillator Power Amplifier") configuration built around an amplified-oscillator architecture, comprising:
- a doped fibre constituting the amplifier,
- a laser source emitting in the amplification spectral band of said doped fibre,
- means for coupling said laser source in the doped core of said doped fibre, at at least one end of the fibre,
- a pump source emitting in the absorption spectral band of the amplifying fibre,
- means for coupling said pump source in the sheath of said doped fibre,
said amplifier comprising intracavity wavelength-selective elements able to cooperate with the injection means so as to filter on the given wavelength and also to reinject into the fibre the pump wave not absorbed after passing through the fibre.

8. Optical source according to any one of claims 1 to 7, **characterised in that** the coupling means relate to a coupler comprising N input multimode fibres able to be welded directly to the fibred outputs of N pumping diodes and an output fibre able to be directly welded to the amplifying fibre.

9. Optical source according to any one of claims 1 to 6, **characterised in that** said doped fibre constitutes an amplifying fibre, said source furthermore comprising:
- a pump source emitting in the absorption spectral band of the amplifying fibre;
- means for coupling said pump source in the sheath of said doped fibre;
- an optical resonator able to reinject the laser beam issuing from the doped core of said fibre at the two ends of said amplifying fibre.

10. Optical source according to any one of the preceding claims, **characterised in that** said doped fibre is formed by a doped core surrounded by a tubular section with an index less than the index of the doped core and the sheath, the index varying radially from a maximum index at the centre to a minimum index at said tubular section, and an intermediate index at the sheath.

11. Optical source according to any one of the preceding claims, **characterised in that** said doped fibre is a polarisation-maintenance fibre.

12. Optical source according to the preceding claim, **characterised in that** said doped fibre comprises a sheath having longitudinal areas doped with a first type of doping and longitudinal areas doped with a second type of doping.

13. Optical source according to any one of the preceding claims, **characterised in that** said doped fibre comprises a core carrying at least one Bragg grating inscribed by photoetching, with a given transmission spectrum for filtering the emissions outside the required emission spectral band.

14. Optical source according to any one of the preceding claims, **characterised in that** the doped fibre is divided into two lengths at least separated by at least one filter the transmission spectrum of which is determined for filtering the emissions outside the required emission spectral band or by an optical isolator.

15. Method for manufacturing a doped fibre intended for a source according to claim 12, **characterised in that**, in a preform, a central element doped with a rare earth for forming the core of the fibre is assembled, and at least six peripheral elements doped with a first dopant in the case of some of them and a second dopant in the case of some of them, surrounding said core, for forming the sheath of the fibre.
